Europäisches Patentamt

European Patent Office

Office européen des brevets

(11) Publication number: **0 148 762 B1**

# EUROPEAN PATENT SPECIFICATION

(45) Date of publication of patent specification: **28.10.92**  (51) Int. Cl.⁵: **B29C 67/14**

(21) Application number: **85300033.9**

(22) Date of filing: **03.01.85**

(54) **Improvements in fibre reinforced moulded plastics articles.**

(30) Priority: **06.01.84 GB 8400292**

(43) Date of publication of application:
**17.07.85 Bulletin  85/29**

(45) Publication of the grant of the patent:
**28.10.92 Bulletin  92/44**

(84) Designated Contracting States:
**AT BE CH DE FR GB IT LI LU NL SE**

(56) References cited:
**CH-A- 462 024**
**FR-A- 1 529 133**
**JP-A-56 037 373**
**US-A- 3 428 518**
**US-A- 3 865 661**

(73) Proprietor: **The Wiggins Teape Group Limited**
**P.O. Box 88 Gateway House Basing View**
**Basingstoke Hampshire RG21 2EE(GB)**

(72) Inventor: **Radvan, Bronislaw**
**25 The Meadows**
**Flackwell Heath Buckinghamshire(GB)**
Inventor: **Willis, Anthony John**
**16 Jerome Close**
**Marlow Buckinghamshire(GB)**

(74) Representative: **Bridge-Butler, Alan James et al**
**G.F. REDFERN & CO. High Holborn House**
**52/54 High Holborn**
**London WC1V 6RL(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of moulding articles of fibre reinforced plastics material.

Heretofore, fibre reinforced plastics articles have been moulded from consolidated rigid sheets embodying glass fibre mat formed from very long glass fibre strands (i.e. fibre bundles) of perhaps 200 centimetres or more in length which extend in a random serpentine manner throughout the sheet.

For the satisfactory moulding of such sheets, they must be homogeneously pre-heated. This requires both time and accurate temperature control if overheating and degradation of the sheet surfaces is not to occur whilst the core portions of the sheets are brought up to the required moulding temperature. Such materials do not lend themselves easily to deep draw moulding.

According to the present invention a process for making a shaped article from a web of fibre reinforced synthetic plastics material comprising from 20% to 60% by weight of single discrete fibres having a modulus of elasticity higher than 10000 Mega Pascals, and between 7 and 50 millimetres long, and from 40% to 80% by weight of unconsolidated particulate thermoplastics material, the particulate thermoplastic material having a particle size of less than about 1.5 millimetres comprising the steps of heating said web first so as to remove residual moisture therefrom and then so as to bond the fibrous and plastics components together into a self-sustaining permeable sheet while substantially maintaining the particulate form of the plastics material, passing heated air through said sheet in a through air heating oven so as to cause substantially uniform and homogeneous heating of the components thereof to a temperature at which the viscosity of the thermoplastic constituting the particulate component is sufficiently low to permit the sheet to be moulded into a shaped article; placing said heated permeable sheet in a compression mould; and subjecting said sheet to compression moulding at a predetermined pressure so as to form a shaped fibre reinforced plastics article.

After through air heating, the structure may simply be moulded into an impermeable article. Alternatively, it may be subjected to limited compression in the mould so as to remain permeable. Or it may be fully compressed in the mould so as to cause the molten thermoplastics material to wet the fibres. The mould is then slightly opened so as to allow the material to expand as a result of the resilience of the fibres and become permeable as described and claims in European Patent Application No. 85300034.7 (Publication No. 0 148 763).

When glass fibres are used and are received in the form of chopped strand bundles, the bundles are broken down into single fibres before the structure is formed.

The high modulus of elasticity is to be taken as meaning a modulus of elasticity substantially higher than that of a consolidated sheet which could be formed from the structure. The fibres falling into this category include glass, carbon and ceramic fibres and fibres such as the aramid fibres sold under the trade names Kevlar and Nomex and will generally include any fibre having a modulus higher than 10,000 Mega Pascals.

A process for producing a structure of the kind above described is disclosed in co-pending European patent Application No. 85300031.3 (Publication No. 0 148 760).

A convenient process according to the invention includes heating the sheet in an oven in which the sheet is located between open supports through which hot air is passed.

The invention will now be further described with reference to the accompanying drawings in which :-

Figure 1 is a diagrammatic cross-section through an open permeable structure of the kind suitable for use as a starting material in the present invention,

Figure 2 is a sectional side elevation through a through air heating oven for use in the process of the invention, and

Figure 3 is a sectional side elevation through a mould showing a moulding being formed in accordance with the process of the invention.

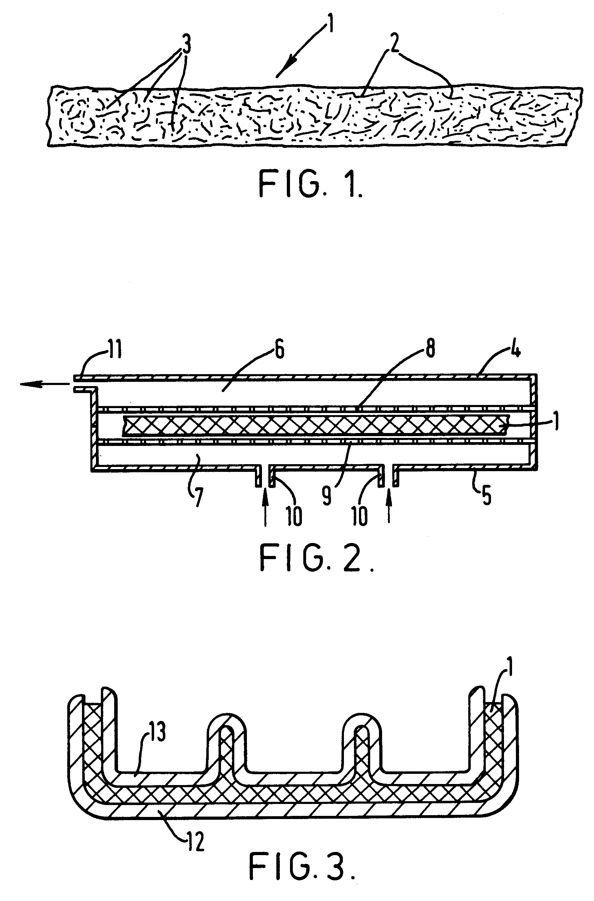

Referring first to Figure 1, this shows an uncompacted fibrous structure 1 comprising fibres 2 interspersed with particulate plastics material 3, the fibres and plastics particles being bonded together so as to form a coherent but permeable structure.

Figure 2 shows an oven for heating a permeable structure 1 of the kind shown in Figure 1. The oven consists of an upper part 4 and a lower part 5, the parts 4 and 5 including plenum chambers 6 and 7 respectively. The lower wall 8 of the part 4 and the upper wall 9 of the part 5 consist of grilles which facilitate the substantially unrestricted passage of air.

In order to heat the structure 1, hot air is introduced into the plenum chamber 7, passes through the grill 9, the structure 1 and the grill 8 and is then vented through the duct 11 from the plenum chamber 6.

After heating as described to, say, 200°C, the structure 1 is transferred to a mould, typically of the kind shown in Figure 3.

Referring now to Figure 3, this shows a mould having an upper part 13 and a complementary lower part 12 between which the structure 1 has been moulded.

The mould may be used to fully consolidate the structure so that the resulting moulding is solid and impermeable. Or the moulding may be partially compacted so as to remain porous. Alternatively, a porous article can be achieved by partly or fully compacting and consolidating the article and then opening the mould slightly so as to allow the resilience of the glass fibre content to expand the moulding to the desired thickness.

Suitable thermoplastics include polyethylene, polypropylene, polystyrene, acrylonitrylstrene, butadiene, polyethylene terephthalate, and polyvinyl chloride, both plasticised and unplasticised. It is anticipated that any thermoplastics material may be used which is not chemically attacked by water and which can be sufficiently softened by heat without being chemically decomposed.

A sheet of lightly bonded unconsolidated permeable material comprising 33% single glass fibres 13 millimetres long and 11 microns in diameter, 67% polypropylene powder together with a proprietary antioxidant, and having a substance of 3,000 grams per square metre was placed in a through drying oven manufactured by Honeycomb Engineering Co. Hot air at 230° C was fed to the upper face of the sheet and a partial vacuum applied to the under side. The porous nature of the sheet mat allowed hot air to pass through it so uniformly heating the material. After a short time (about 6 secs), the still porous material was fully heated to the air temperature of 230° C. This temperature, being some 50° C higher than the melting point of polypropylene, allowed the mat to be quickly removed from the oven and moulded into shape. During heating of the mat it was noted that pressure drop across the thickness of the material was substantially constant, being 76 cm water gauge to start and rising to 85 cm water gauge at completion of heating.

A further example utilised material containing 50% glass (13 millimetres long, 11 microns diameter as before), 50% polypropylene powder + antioxidant. The heating time was about 4 seconds with the pressure drop being the same as in the previous examples.

This ability to heat a porous unconsolidated web has a number of significant advantages :-

a) Saving in processing time and cost since manufacture is eliminated.

b) A more rapid heating of material prior to the moulding operation; approximately 6 seconds opposed to 3 minutes for a consolidated sheet in an infra red oven.

c) The development of a better temperature gradient throughout the thickness of the material, since the passage of hot air heats the mat uniformly through its thickness whilst infra red heating of a consolidated sheet develops a temperature profile from the surface to the centre with risk of thermal degradation of plastic at the surface before the centre has attained the desired temperature.

d) Blanks can be cut from the unconsolidated mat prior to heating and the 'waste' material readily "repulped" for re-use. Whereas waste arising from blanks cut from consolidated sheet must be ground at much higher cost into a particulate form for re-use.

## Claims

1. A process for making a shaped article from a web of fibre reinforced synthetic plastics material comprising from 20% to 60% by weight of single discrete fibres having a modulus of elasticity higher than 10000 Mega Pascals, and between 7 and 50 millimetres long, and from 40% to 80% by weight of unconsolidated particulate thermoplastics material, the particulate thermoplastic material having a particle size of less than about 1.5 millimetres comprising the steps of heating said web first so as to remove residual moisture therefrom and then so as to bond the fibrous and plastics components together into a self-sustaining permeable sheet while substantially maintaining the particulate form of the plastics material, passing heated air through said sheet in a through air heating oven so as to cause substantially uniform and homogeneous heating of the components thereof to a temperature at which the viscosity of the thermoplastic constituting the particulate component is sufficiently low to permit the sheet to be moulded into a shaped article; placing said heated permeable sheet in a compression mould; and subjecting said sheet to compression moulding at a predetermined pressure so as to form a shaped fibre reinforced plastics article.

2. A process as claimed in claim 1 in which the components are bonded together by surface fusion of the particulate plastics material.

3. A process as claimed in claim 1 or claim 2 in which the components are bonded together by a binder added during formation of the web.

4. A process as claimed in claim 3 in which the binder is selected from the group consisting of polyvinyl alcohol, polyvinyl acetate, carboxymethyl cellulose and starch.

5. A process as claimed in any one of the preceding claims in which the fibres are glass fibres having a diameter smaller than about 13 microns.

6. A process as claimed in any one of the preceding claims in which the plastics material is a thermoplastic material and is selected from the group consisting of polyethylene, polypropylene, polystyrene, acrylonitrylstyrene butadiene, polyethylene terephthalate, and polyvinyl chloride, both plasticised and unplasticised.

7. A process as claimed in any one of the preceding claims in which the degree of bonding is controlled to cohere the components while still retaining sufficient flexibility to permit the structure to be reeled.

8. A process as claimed in any one of the preceding claims 1 to 6 in which the degree of bonding is controlled to produce a rigid but air permeable sheet.

**Patentansprüche**

1. Verfahren zur Herstellung eines geformten Gegenstands aus einer Faserstofflage faserverstärkten synthetischen Kunststoffmaterials mit 20 Gew.-% bis 60 Gew.-% einzelner, diskreter Fasern, deren Elastizitätsmodul größer als 10000 Megapascal und deren Länge zwischen 7 und 50 mm ist und mit 40 Gew.-% bis 80 Gew.-% unverfestigtem partikelförmigem thermoplastischem Material mit einer Partikelgröße unter etwa 1.5 mm, beinhaltend mehrere Schritte, und zwar zunächst das Aufheizen der Faserstofflage zur Entfernung von Restfeuchtigkeit daraus und dann, zur Verbindung der Faser- und Kunststoffkomponenten miteinander zu einer selbsttragenden durchlässigen Materialbahn bei im wesentlicher Erhaltung der Partikelform des Kunststoffmaterials, die Durchführung heißer Luft durch die Materialbahn in einem Durchluftofen zur im wesentlichen gleichmäßigen und homogenen Erhitzung ihrer Komponenten auf eine Temperatur, bei der die Viskosität des die Partikelkomponente bildenden Thermoplasten gering genug ist, um die Materialbahn zu einem geformten Gegenstand zu verformen; das Einsetzen dieser erhitzten durchlässigen Materialbahn in eine Preßform; und die Durchführung einer Preßverformung bei dieser Materialbahn bei festgelegtem Druck zur Bildung eines geformten faserverstärkten Kunststoffgegenstands.

2. Verfahren nach Anspruch 1, wobei die Komponenten durch Oberflächenverschmelzung des partikelförmigen Kunststoffmaterials miteinander verbunden werden.

3. Verfahren nach Anspruch 1 oder 2, wobei die Komponenten durch einen während der Bildung der Faserstofflage zugegebenen Binder miteinander verbunden werden.

4. Verfahren nach Anspruch 3, wobei der Binder aus den Stoffen Polyvinylalkohol, Polyvinylacetat, Carboxymethylcellulose und Stärke ausgewählt wird.

5. Verfahren nach einem der voranstehenden Ansprüche, wobei die Fasern Glasfasern mit einem Durchmesser unter etwa 13 μm sind.

6. Verfahren nach einem der voranstehenden Ansprüche, wobei das Kunststoffmaterial ein thermoplastisches Material ist und aus den Stoffen Polyethylen, Polypropylen, Polystyrol, Acrylnitrylstyrol, Butadien, Polyethylenterephthalat und Polyvinylchlorid, sowohl plastifiziert als unplastifiziert, ausgewählt wird.

7. Verfahren nach einem der voranstehenden Ansprüche, wobei der Grad der Verbindung so eingestellt wird, daß sich die Komponenten aneinanderlagern, jedoch eine ausreichende Flexibilität zum Aufrollen der Struktur erhalten bleibt.

8. Verfahren nach einem der voranstehenden Ansprüche, wobei der Grad der Verbindung so eingestellt wird, daß eine steife, aber durchlässige Materialbahn entsteht.

**Revendications**

1. Procédé pour fabriquer un article formé à partir d'un tissu de fibres renforcé avec une matière plastique synthétique, comprenant de 20 % à 60 % en poids de fibres discrètes simples ayant un module d'élasticité supérieur à 10.000 Mégapascals, de longueur comprise entre 7 et 50 mm, et de 40 % à 80 % en poids de matière thermo-plastique en particules non consolidées, la matière thermo-plastique en particules ayant une dimension de particules inférieure à environ 1,5 mm; comprenant les étapes consistant à chauffer ledit tissu, tout d'abord pour éliminer l'humidité résiduelle, et ensuite pour lier ensemble les composants fibreux et plastiques en une feuille perméable se supportant elle-même, tout en maintenant de façon substantielle la forme particulaire de la matière plastique; à faire passer de l'air chauffé à travers ladite feuille dans un four à circulation d'air chaud, de façon à créer un chauffage sensiblement uniforme et homogène des composants, à une température à laquelle la viscosité de la matière thermo-plastique constituant le composant particulaire est assez basse pour permettre à la feuille d'être moulée en un article de forme; à placer ladite feuille perméable chauffée dans un moule de compression; et à soumettre ladite feuille à un moulage par compression à une pression prédéterminée de façon à obtenir un article formé en matière plastique renforcée de fibres.

2. Procédé selon la revendication 1, dans lequel les composants sont liés ensemble par la fusion superficielle du matériau plastique particulaire.

3. Procédé selon les revendications 1 ou 2, dans lequel les composants sont liés ensemble par un liant ajouté pendant la formation du tissu.

4. Procédé selon la revendication 3, dans lequel le liant est choisi dans le groupe constitué par l'alcool polyvinylique, l'acétate de polyvinyle, la carboxyméthyle, cellulose et l'amidon.

5. Procédé selon l'une quelconque des revendications précédentes, dans lequel les fibres sont des fibres de verre ayant un diamètre inférieur à environ 13 microns.

6. Procédé selon l'une quelconque des revendications précédentes, dans lequel le matériau plastique est un matériau thermo-plastique, et est choisi dans le groupe constitué par le polyéthylène, le polypropylène, le polystyrène, l'acrylonitrile-styrène-butadiène, le polyéthylène téréphthalate et le chlorure de polyvinyle, à la fois plastifiés et non plastifiés.

7. Procédé selon l'une quelconque des revendications précédentes, dans lequel le degré de liaison est commandé pour agglomérer les composants tout en gardant une flexibilité suffisante pour permettre à la structure d'être bobinée.

8. Procédé selon l'une quelconque des revendications précédentes 1 à 6, dans lequel le degré de liaison est commandé pour produire une feuille rigide mais perméable à l'air.

FIG. 1.

FIG. 2.

FIG. 3.